# EUROPEAN PATENT SPECIFICATION

(11) **EP 1 935 193 B1**
(45) Date of publication and mention of the grant of the patent: **03.11.2010**
(21) Application number: 06796054.2
(22) Date of filing: 13.10.2006
(51) Int. Cl.: H04L 29/08

(54) **MOBILE NETWORK USER TERMINAL STATUS MONITORING**
ÜBERWACHUNG DES ENDGERÄTEZUSTANDS EINES MOBILNETZBENUTZERS
SURVEILLANCE DE L'ETAT D'UN TERMINAL UTILISATEUR DANS UN RESEAU MOBILE

(30) Priority: 13.10.2005 US 725659 P
(43) Date of publication of application: 25.06.2008
(73) Proprietor: Markport Limited, Dublin 2 (IE)
(72) Inventor: VAN WINGERDE, Gertjan, NL-7544 TX Enschede OV (NL)
(74) Representative: Weldon, Michael James
(86) International application number: PCT/IE2006/000112
(87) International publication number: WO 2007/043033

(56) References cited:
- EP-A2- 1 534 026
- WO-A-2006/034939
- US-A1- 2004 110 502
- US-B1- 6 658 095
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-SA2, no. V670, September 2004 (2004-09), XP014027506 ISSN: 0000-0001

## Description

### Field of the Invention

The invention relates to mobile networks.

### Prior Art Discussion

A number of mobile network monitoring approaches are known in the art. US2005/0097209, for example, describes use of non-intrusive probes which capture transaction data, and QoS metrics are generated. US2006/0072583 describes monitoring and displaying network performance metrics. WO01/63825 describes a method of non-intrusively monitoring a network for determining a predetermined characteristic and alerting a remote response center. A high impedance, variable gain tap is used.

The 3GPP Technical Specification 23.141 version 6.7.0 Release 6 describes a Presence Service performed by a Presence server linked with Presence External, Presence User, and Presence Network Agents.

A problem with at least some existing monitoring approaches is that a large volume of data is generated, giving rise to extensive filtering and processing operations.

Another problem is that there is limited available data concerning status of a user and/or mobile device in a network, particularly if there are multiple available communication technologies/protocols in the network.

### SUMMARY OF THE INVENTION

According to the invention, there is provided a mobile network user terminal status information system as set out in claim 1.

In one embodiment, the processor is adapted to automatically determine the schedule according to rules relating to multiple networks or service overlay networks with which the user terminal may be associated.

In one embodiment, the rules are configurable.

In another embodiment, the rules are adaptive so that capabilities of status providers are dynamically updated according to responses received.

In one embodiment, the processor is adapted to automatically determine in real time user terminal status in a network from an already known status in a related network without making a further request to a status provider.

In one embodiment, the processor is adapted to manage a set of mappings defining relationships between networks and/or service overlay networks and refers to these mappings to automatically determine related network status.

In a further embodiment, the processor is adapted to set up automatic user terminal status change notification service requests with status providers.

In one embodiment, the processor is adapted to manage one or more automatic status change notifications from status providers by automatically generating one or more corresponding status change notifications for a client.

In one embodiment, the processor is adapted to generate a corresponding client status change notification without consolidation of automatic status change notifications from the status providers.

In one embodiment, the processor is adapted to filter automatic status change notifications from status providers.

In one embodiment, the processor is adapted to filter automatic status change notifications from the status providers according to criteria supplied by a client.

In one embodiment, the processor is adapted to automatically infer network status data in response to a notification and can choose to ignore or suppress a subsequent notification incorporating information already deduced.

In one embodiment, the system is adapted to operate in a network status enquiring mode, in a network status change notification mode, or in both modes.

In another aspect, the invention provides a computer readable medium comprising software code for implementing operations of any information system as defined above when executing on a data processor.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a block diagram of a user terminal network status enquiry and notification system of the invention; and
Figs. 2, 3 and 4 are message transfer diagrams illustrating operation of the system.

### Description of the Embodiments

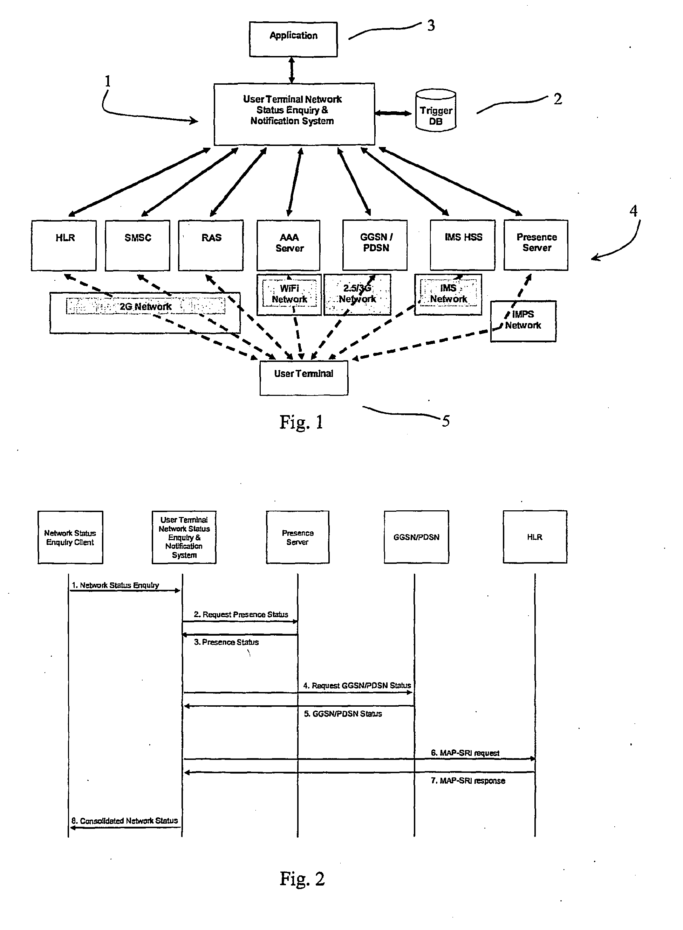

Referring to Fig. 1 a user terminal network status enquiry and notification system 1 has a trigger database 2, and it interfaces on one side with clients 3 and on the other side with multiple network status providers 4. These network status providers 4 are capable of providing information on the network status of a user terminal 5 (i.e. the availability of a user terminal on certain network-technologies), without having to contact the user terminal 5 to obtain that network status. In this specification the term "user terminal" means a user mobile terminal or device or multiple user terminals. For example, a particular user may possess a number of terminals, and the system of the invention will gather information on a specified subset or all of the devices for a user.

The system 1 allows a client 3 to enquire about the current network status of a user terminal 5, and it allows a client to register the fact that the client is waiting for a network status change notification for a particular user terminal 5. The system 1 interfaces with a number of the external network status providers 4 according to a schedule, which it automatically generates, and combines the information from these providers into a single network status message returned to the requesting client 3.

The system 1 allows the client 3 to specify the set of criteria that a network status response should adhere to. The system 1 also allows the client 3 to specify the set of network status attributes that should be returned by the system 1 in the network status response.

The network status response includes information concerning the status of a user terminal with respect to a network such as a 2.5G network or a WiFi network, and also with respect to what are conventionally referred to as service overlay networks such as IMPS and IMS networks. They are henceforth all referred to as simply "networks" for clarity. Also, the system is constituted for operation across multiple operator network boundaries, however in other embodiments it is only for operation with the networks of one operator.

The system 1 has a configurable and adaptive set of rules that generate the schedule determining which status providers 4 are asserted for a specific client request, and in which order these providers 4 are asserted. These rules are also executed to assert whether requests to status providers 4 are synchronous or asynchronous. The schedule can be dynamically modified in real time according to responses as they are received from the status providers. Furthermore the system 1 is adaptive in so far as it dynamically modifies capabilities of the status providers, as stored in a lookup table, according to the status provider responses.

The system 1 also comprises a logic function to deduce network status relationships. For example a specific network status at AAA-level pre-determines the network status at HLR level. The system 1 uses this capability to generate the schedule to optimize the interactions with both the status providers 4 and the client 3.

In order to provide its functionality, the system 1 is capable of interfacing with the following (non exhaustive) list of network status providers 4:
- HLR (Home Location Register)
- SMSC (Short Message Service Centre),
- RAS (Remote Access Server)
- AAA (Authentication, Authorization, Accounting) Server
- GGSN/PDSN, (Gateway GPRS Support Node, Packet Data Serving Node)
- IMS HSS, (IP multimedia Subsystem Home Subscriber Server)
- Presence (e.g. IMPS (Instant Messaging and Presence Service), IMS, ...),
- ...

Two interaction types are performed:
- Network status enquiring - a process of obtaining the current network status of a user terminal by requesting information from one or more providers 4 according to a schedule.
- Network status change notification - of being notified about a network status change of a user terminal and processing these notifications.

### Network Status Enquiring:

Network status enquiring is a process whereby the client 3 can request the current network status of a user terminal to the system 1. The client 3 can indicate in its request to the system 1 which network status attributes should be returned by the system 1. The system 1 will then, based on the request of the client 3, automatically determine according to its rules which network status providers 4 need to be requested, and in which order. It will then access each of these network status providers 4, and return the consolidated network status to the client 3.

The interactions between the different elements for network status enquiry are illustrated by the message flow diagram of Fig. 2.

Fig. 2 shows an application (the network status enquiry client) that requests the current network status of a particular user terminal from the system 1, specifying that the application is interested in the network status of the user terminal on the 2G PLMN network, the 2.5/3G GPRS/UMTS network and on the IMPS messaging network. In this example flow the user terminal is currently only available on the 2G PLMN network. The system 1 then queries each of the applicable network status providers to determine the current network status of the user terminal, and returns a consolidated response (i.e. containing the network status of the user terminal on each of the requested networks in one response).

This message flow of Fig. 2 can be described as:
1. An application (the network status enquiry client) requests the current network status of a user terminal. Within the request the application supplies the criteria for the system 1 response (i.e. which network statuses is the application interested in and/or what network status attributes should be supplied). In this example the application requests the network status of the user terminal on the 2G, 2.5/3G, and IMPS networks.
2. The system 1 determines the list of network status providers that need to be triggered (in this case the HLR, the GGSN/PDSN, and the presence server), and subsequently requests the current network status of the user terminal to the first network status provider (in this case the presence server).
3. The presence server responds with the current presence status of the user terminal, indicating that the user terminal is not available on the IMPS network.
4. If the presence server didn't provide enough information to the system 1 for it to satisfy the request of the application, the system 1 requests the current network status of the user terminal to the second network status provider (in this case the GGSN/PDSN).
5. The GGSN/PDSN responds with the current GPRS/UMTS network PDP-context status of the user terminal, indicating that the user terminal is not available on the GPRS/UMTS network.
6. If the GGSN/PDSN still didn't provide enough information to the system 1 for it to satisfy the request of the application, the system 1 requests the current network status of the user terminal to the third network status provider (in this case the HLR).
7. The HLR responds with the current PLMN network status of the user terminal, indicating that the user terminal is available on the PLMN.
8. The system 1 consolidates the different items of network status data into a single consolidated network status (containing the information that the user terminal is not available on the IMPS and GPRS/UMTS networks, but that the user terminal is available on the PLMN), and sends this single network status to the requesting application as the response of the request sent in step 1.

The above is merely an example message flow. Many permutations of message flow type can be made with different network status providers and with a different number of network status providers, and different operations and methods can be used. For example, the application could request status, which requires information from only a single network status provider.

If the presence server indicates in step 3 the availability of the user terminal on the IMPS network, the network status deduction logic of the system 1 allows it to deduce that the user terminal in that case is automatically available on the GPRS/UMTS and PLMN network, removing the need to actually trigger the GGSN/PDSN and the HLR.

This logic allows the client to send a simple query, such as a request for information on presence-based services, and the system automatically makes the range of requests necessary, avoiding those which are not necessary.

In the above message flow the network status providers are approached in a synchronous manner. However, this does not have to be the case. Network status providers can also be approached in an asynchronous manner. The difference between synchronous operation mode and asynchronous operation mode is that in synchronous operation mode the system 1 queries the network status providers 4 in turn, waiting on each network status provider to provide a response before triggering the next network status provider. In asynchronous operation mode all the network status providers are triggered in parallel with each other, where the system 1 does not wait for a network status provider response before triggering the next network status provider.

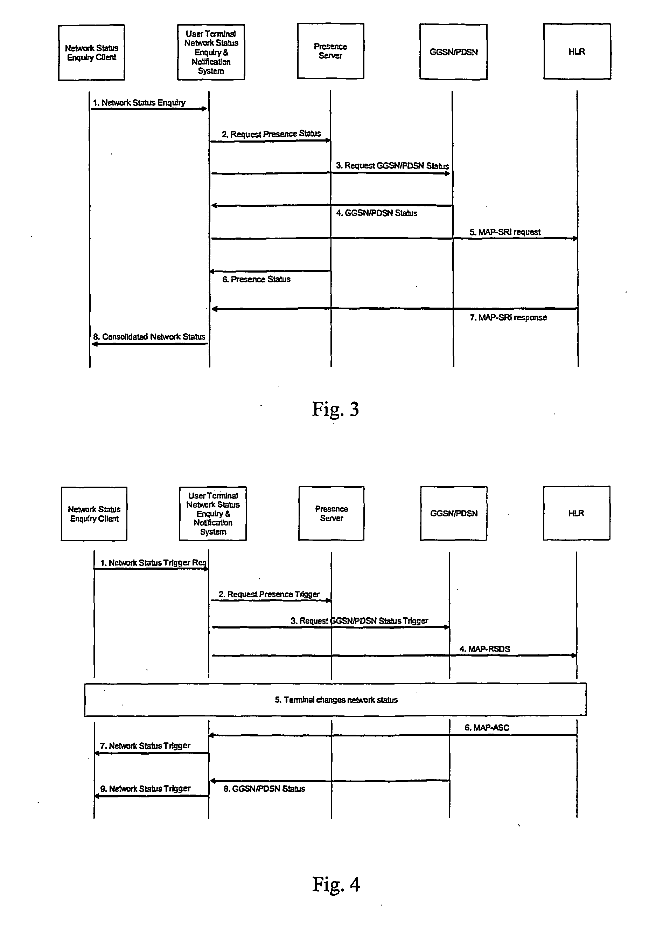

Fig. 3 shows an example of the message flow when the system 1 runs in asynchronous operation mode.

### Generation of Network Status Enquiring Schedule

The system 1 generates a list of network status providers 4 it needs to trigger, and the order in which it needs to trigger these network status providers 4 on the basis of the network characteristics provided by the client application 3, and the knowledge that it has on the topology of the various network technologies that it supports (via the network status providers).

For example, consider the situation where the system 1 is capable of interacting with the following network status providers 4:
- An HLR for obtaining the 2G PLMN network status.
- A GGSN/PDSN for obtaining the 2.5/3G GPRS/UMTS network status.
- An AAA-server for obtaining the WiFi network status.
- A HSS for obtaining the IMS network status.
- A presence server for obtaining the IMPS network status.

In addition to the connections to these network status providers the system 1 operates with the knowledge that when a user terminal is available on the IMS network, that this automatically means that the user terminal must be available on the 2.5/3G GPRS/UMTS network and that the user terminal must also be available on the 2G PLMN network. Similar knowledge can be applied to availability on the IMPS network.

Applying all this knowledge in the network status provider determination process when a client application request is handled, results in the optimal list of network-providers that need to be triggered, and the order in which they need to be triggered, resulting in an optimal usage of the network and the network status providers. As an example, when a client application submits a request indicating that the client application is interested in the network status of a user terminal on the IMS network, the 2.5/3G GPRS/UMTS network, and/or the 2G PLMN network, then applying the knowledge described above results in a network status provider triggering scheme where the HSS is triggered first, followed by the GGSN/PDSN, and finally the HLR. At any point in time the system 1 can stop triggering the still remaining network status providers when it has enough information to provide a response to the client application 3 (e.g. when the HSS already indicates availability of the user terminal on the IMS network, then the system 1 does not have to trigger the GGSN/PDSN and the HLR as it can already deduce the requested 2.5/3G GPRS/UMTS network status and the 2G PLMN network status from the IMS network status).

This network status enquiring schedule determination process ensures that the system 1 is able to provide up-to-date network status information of the user terminal 5 to the requesting client application 3, while ensuring that the network and the network status providers are not put under load unnecessarily.

### Network Status Notification

Network status notification is a process whereby the client 3 can request the system 1 to be notified upon network status changes of a specific user terminal 5. The client 3 can indicate in his request to the system 1 the list of network status attributes that should be supplied by the system 1 in the notifications, and the criteria that the notifications should adhere to (e.g. the client 3 is only interested when a user terminal comes into 2.5G coverage or better). The system 1 will then, based on the request of the client 3, determine which network status providers 4 need to be referenced. It will then set up each of these network status providers 4 to send triggers to the system 1, and, upon reception of these triggers from the network status providers 4, send network status change notifications to the client 3 (when the triggers satisfy the criteria specified by the client 3).

Interactions between the different elements for network status change notification are illustrated by the message flow diagram of Fig. 4 Fig. 4 shows an application (the network status enquiry client) that has previously determined the network status of a particular user terminal 5, and wants to be notified of changes to the network status of that user terminal 5 from the system 1, specifying that the application is only interested in the network status updates of the user terminal that are related to the 2G PLMN network, the 2.5/3G GPRS/UMTS network and on the IMPS messaging network. The system 1 then sets up triggers in each of the applicable network status providers to be notified of changes to the current network status of the user terminal, and, when these notifications are received from the network status providers provides notifications to the requesting application regarding these network status changes. In this example flow the user terminal was not available on any network, and becomes only available on the 2G PLMN network and the 2.5/3G GPRS/UMTS network.

This message flow can be described as follows:
1. The application (the network status enquiry client) requests notification of a change in the network status of a user terminal to the system 1. Within the request the application supplies the criteria for the system 1 response (i.e. which network status is the application interested in and/or what network status attributes should be supplied). In this example the application indicates that it is only interested in the network status of the user terminal on the 2G, 2.5/3G, and IMPS networks.
2. The system 1 determines the list of network status providers in which triggers need to be set up (in this case the HLR, the GGSN/PDSN, and the presence server), and subsequently sets up a trigger to provide a notification upon a network status change of the same user terminal to the first network status provider (in this case the presence server).
3. The system 1 sets up a trigger to provide a notification upon a network status change of a user terminal to the second network status provider (in this case the GGSN/PDSN).
4. The system 1 sets up a trigger to provide a notification upon a network status change of the same user terminal to the third network status provider (in this case the HLR).
5. The user terminal changes its network status (e.g. it attaches to the PLMN network and sets up a PDP context).
6. The HLR detects the PLMN attachment procedure, and notifies the system 1 that the user terminal is back in PLMN coverage.
7. The system 1 determines that the application is interested in this network status change, and sends a notification towards the application, stating that now the user terminal is available on the PLMN.
8. The GGSN/PDSN detects that the user terminal sets up a new PDP context, and notifies the system 1 that the user terminal has connected to the GPRS network.
9. The system 1 determines that the application is interested in this network status change, and sends a notification towards the application, stating that the user terminal is now also available on the GPRS/UMTS network.

Again, this is only an example message flow. Many permutations of the same message flow type can be made with different network status providers and with a different number of network status providers. For example, the application could request status from a single network status provider.

All messages in the message flow are in fact confirmed messages, i.e. the receiving party acknowledges reception of the message. For simplicity this has been left out of the message flow.

In the above message flow the application could also have indicated to the system 1 that it only would like to receive consolidated network status change notifications, instead of individual notifications of each network status change. In that case step 7 would not have been performed in the message flow, and in step 9 the system 1 would have sent a notification to the application that the user terminal had become available on both the 2.5/3G GPRS/UMTS network and the 2G PLMN network.

The same network status deduction logic as described within the network status enquiry message flow can be performed here. If the system 1 received a network status change notification from the presence server network status provider before steps 6-9, then the system 1 would have deduced that the user terminal now automatically also has become available on the 2.5/3G GPRS/UMTS network and the 2G PLMN network. It would then have cancelled the triggers in (or ignored subsequent network status change notifications indicating availability from) the HLR and the GGSN/PDSN network status providers, and would have sent a notification to the application that the user terminal had become available on the IMPS, the 2.5/3G GPRS/UMTS, and the 2G PLMN networks.

It will be appreciated that the invention allows comprehensive tracking of user and/or terminal status activities in a network. This is achieved even if the network has multiple technologies (e.g. IP and SS7) and the user terminal switches between the two. Also, because the system 1 automatically generates an appropriate schedule, the level of traffic introduced is kept to a minimum. There is no need to filter and process large volumes of irrelevant data.

The invention is not limited to the embodiments described but may be varied in construction and detail.

## Claims

1. A mobile network user terminal status information system (1) including:
a network interface to a plurality of network status providers,
a client interface to clients (3), and
a processor for receiving from the client interface a client request for user terminal network status information, **characterized in that** the processor further comprises means for:
automatically determining according to rules a schedule of network status providers (4) to request information from, wherein the schedule defines the relevant network status providers (4) and the order of transmitting requests to them,
directing the network interface to transmit to the network status providers (4) identified in the schedule requests for user terminal network status information and for receiving corresponding network status provider responses, and
processing said responses to give a consolidated user terminal network status response to the client (3).

2. An information system as claimed in claim 1, wherein the processor automatically determines the schedule according to rules relating to multiple networks or service overlay networks with which the user terminal may be associated.

3. An information system as claimed in claim 1 or 2, wherein the rules are configurable.

4. An information system as claimed in claims 1 to 3, wherein the rules are adaptive so that capabilities of status providers are dynamically updated according to responses received.

5. An information system as claimed in any preceding claim, wherein the processor automatically determines in real time user terminal status in a network from an already known status in a related network without making a further request to a status provider (4).

6. An information system as claimed in claim 5, wherein the processor is adapted to manage a set of mappings defining relationships between networks and/or service overlay networks and refers to these mappings to automatically determine related network status.

7. An information system as claimed in any preceding claim, wherein the processor is adapted to set up automatic user terminal status change notification service requests with status providers.

8. An information system as claimed in claim 7, wherein the processor is adapted to manage one or more automatic status change notifications from status providers by automatically generating one or more corresponding status change notifications for a client.

9. An information system as claimed in claim 8, wherein the processor is adapted to generate a corresponding client status change notification without consolidation of automatic status change notifications from the status providers.

10. An information system as claimed in any of claims 7 to 9, wherein the processor is adapted to filter automatic status change notifications from status providers.

11. An information status system as claimed in claim 10, wherein the processor is adapted to filter automatic status change notifications from the status providers according to criteria supplied by a client.

12. An information system as claimed in any of claims 7 to 11, wherein the processor is adapted to automatically infers network status data in response to a notification and can choose to ignore or suppress a subsequent notification incorporating information already deduced.

13. An information system as claimed in any of claims 7 to 12, wherein the system is adapted to operate in a network status enquiring mode, or in a network status change notification mode, or in both modes.

14. A computer readable medium comprising software code for implementing operations of an information system as claimed in any preceding claim when executing on a data processor.

## Patentansprüche

1. Statusinformationssystem (1) für ein Benutzerendgerät in einem mobilen Netzwerk, wobei das System Folgendes umfasst:
eine Netzwerkschnittstelle zu mehreren Netzwerkstatus-Providem,
eine Client-Schnittstelle zu Clients (3), und
einen Prozessor zum Empfangen einer Client-Anforderung für Benutzerendgerät-Netzwerkstatusinformationen von der Client-Schnittstelle, **dadurch gekennzeichnet, dass** der Prozessor ferner Mittel umfasst zum:
automatischen Ermitteln eines Zeitplans von Netzwerkstatus-Providern (4) zum Anfordern von Informationen von diesen gemäß Regeln, wobei der Zeitplan die relevanten Netzwerkstatus-Provider (4) und die Reihenfolge definiert, in der Anforderungen zu diesen übertragen werden,
Anweisen der Netzwerkschnittstelle, zu den in dem Zeitplan identifizierten Netzwerkstatus-Providern (4) Anforderungen von Benutzerendgerät-Netzwerkstatusinformationen zu übertragen und entsprechende Netzwerkstatus-Provider-Antworten zu empfangen, und
Verarbeiten der genannten Antworten, um dem Client (3) eine konsolidierte Benutzerendgerät-Netzwerkstatus-Antwort zu geben.

2. Informationssystem nach Anspruch 1, wobei der Prozessor automatisch den Zeitplan gemäß Regeln in Bezug auf mehrere Netzwerke oder Service-Overlay-Netzwerke ermittelt, mit denen das Benutzerendgerät assoziiert werden kann.

3. Informationssystem nach Anspruch 1 oder 2, wobei die Regeln konfigurierbar sein können.

4. Informationssystem nach einem der Ansprüche 1 bis 3, wobei die Regeln adaptiv sind, so dass Fähigkeiten von Status-Providern gemäß empfangenen Antworten dynamisch aktualisiert werden.

5. Informationssystem nach einem der vorherigen Ansprüche, wobei der Prozessor automatisch in Echtzeit einen Benutzerendgerät-Status in einem Netzwerk von einem bereits bekannten Status in einem verwandten Netzwerk ermittelt, ohne eine weitere Anforderung an einen Status-Provider (4) zu richten.

6. Informationssystem nach Anspruch 5, wobei der Prozessor die Aufgabe hat, einen Satz von Abbildungen zu verwalten, die Beziehungen zwischen Netzwerken und/oder Service-Overlay-Netzwerken definieren, und auf diese Abbildungen Bezug zu nehmen, um automatisch einen verwandten Netzwerkstatus zu ermitteln.

7. Informationssystem nach einem der vorherigen Ansprüche, wobei der Prozessor die Aufgabe hat, automatische Benutzerendgerät-Statusänderungsmeldungsdienste-Anforderungen mit Status-Providern einzurichten.

8. Informationssystem nach Anspruch 7, wobei der Prozessor die Aufgabe hat, eine oder mehrere automatische Statusänderungsmeldungen von Status-Providern durch automatisches Erzeugen einer oder mehrerer entsprechender Statusänderungsmeldungen für einen Client zu verwalten.

9. Informationssystem nach Anspruch 8, wobei der Prozessor die Aufgabe hat, eine entsprechende Client-Statusänderungsmeldung ohne Konsolidierung von automatischen Statusänderungsmeldungen von den Status-Providern zu erzeugen.

10. Informationssystem nach einem der Ansprüche 7 bis 9, wobei der Prozessor die Aufgabe hat, automatische Statusänderungsmeldungen von Status-Providern zu filtern.

11. Informationsstatussystem nach Anspruch 10, wobei der Prozessor die Aufgabe hat, automatische Statusänderungsmeldungen von den Status-Providern gemäß von einem Client gelieferten Kriterien zu filtern.

12. Informationssystem nach einem der Ansprüche 7 bis 11, wobei der Prozessor die Aufgabe hat, automatisch Netzwerkstatusdaten als Reaktion auf eine Meldung zu inferieren, und wählen kann, ob er eine nachfolgende Meldung ignoriert oder unterdrückt, die bereits gewonnene Informationen enthält.

13. Informationssystem nach einem der Ansprüche 7 bis 12, wobei das System die Aufgabe hat, in einem Netzwerkstatusanfragemodus oder in einem Netzwerkstatusänderungs-Meldungsmodus oder in beiden Modi zu arbeiten.

14. Rechnerlesbares Medium, das Software-Code zum Ausführen von Operationen eines Informationssystems nach einem der vorherigen Ansprüche umafsst, wenn er auf einem Datenprozessor abgearbeitet wird.

## Revendications

1. Un système d'informations d'état de terminal utilisateur de réseau mobile (1) comprenant :
une interface réseau vers une pluralité de fournisseurs d'état de réseau,
une interface client vers des clients (3), et
un processeur destiné à recevoir de l'interface client une demande client pour des informations d'état de réseau de terminal utilisateur, **caractérisé en ce que** le processeur comprend en outre un moyen de :
déterminer automatiquement selon des règles un échéancier de fournisseurs d'état de réseau (4) à qui demander des informations, où l'échéancier définit les fournisseurs d'état de réseau pertinents (4) et l'ordre de transmission de demandes vers ceux-ci,
amener l'interface réseau à transmettre aux fournisseurs d'état de réseau (4) identifiés dans l'échéancier des demandes pour des informations d'état de réseau de terminal utilisateur et de recevoir des réponses de fournisseurs d'état de réseau correspondantes, et
le traitement desdites réponses de façon à fournir une réponse d'état de réseau de terminal utilisateur consolidée au client (3).

2. Un système d'informations selon la Revendication 1, où le processeur détermine automatiquement l'échéancier selon des règles se rapportant à des réseaux multiples ou des réseaux superposés de service auxquels le terminal utilisateur peut être associé.

3. Un système d'informations selon la Revendication 1 ou 2, où les règles sont configurables.

4. Un système d'informations selon l'une quelconque des Revendications 1 à 3, où les règles sont adaptives de sorte que les capacités des fournisseurs d'état soient actualisées dynamiquement selon les réponses reçues.

5. Un système d'informations selon l'une quelconque des Revendications précédentes, où le processeur détermine automatiquement en temps réel un état de terminal utilisateur dans un réseau à partir d'un état déjà connu dans un réseau apparenté sans effectuer une autre demande à un fournisseur d'état (4).

6. Un système d'informations selon la Revendication 5, où le processeur est adapté de façon à gérer un ensemble de mises en correspondance définissant des relations entre réseaux et/ou réseaux superposés de service et se réfère à ces mises en correspondance de façon à déterminer automatiquement un état de réseau apparenté.

7. Un système d'informations selon l'une quelconque des Revendications précédentes, où le processeur est adapté de façon à configurer des demandes de service de notification automatique de changement d'état de terminal utilisateur avec des fournisseurs d'état.

8. Un système d'informations selon la Revendication 7, où le processeur est adapté de façon à gérer une ou plusieurs notifications automatiques de changement d'état provenant de fournisseurs d'état en générant automatiquement une ou plusieurs notifications de changement d'état correspondantes pour un client.

9. Un système d'informations selon la Revendication 8, où le processeur est adapté de façon à générer une notification de changement d'état client correspondante sans consolidation des notifications automatiques de changement d'état provenant des fournisseurs d'état.

10. Un système d'informations selon l'une quelconque des Revendications 7 à 9, où le processeur est adapté de façon à filtrer des notifications automatiques de changement d'état provenant de fournisseurs d'état.

11. Un système d'état d'informations selon la Revendication 10, où le processeur est adapté de façon à filtrer des notifications automatiques de changement d'état provenant des fournisseurs d'état selon des critères fournis par un client.

12. Un système d'informations selon l'une quelconque des Revendications 7 à 11, où le processeur est adapté de façon à déduire automatiquement des données d'état de réseau en réponse à une notification et peut choisir d'ignorer ou de supprimer une notification ultérieure contenant des informations déjà déduites.

13. Un système d'informations selon l'une quelconque des Revendications 7 à 12, où le système est adapté de façon à fonctionner dans un mode d'interrogation d'état de réseau ou dans un mode de notification de changement d'état de réseau, ou dans les deux modes.

14. Un support lisible par ordinateur contenant du code logiciel destiné à mettre en oeuvre les opérations d'un système d'informations selon l'une quelconque des Revendications précédentes lorsqu'il est exécuté sur un processeur de données.
